# EUROPEAN PATENT APPLICATION

(11) **EP 1 691 540 A2**
(43) Date of publication of application: **16.08.2006**
(21) Application number: 06001023.8
(22) Date of filing: 18.01.2006
(51) Int. Cl.: H04N 1/00

(54) **Setup device and method for an image forming apparatus, and computer readable storage medium storing a setup program for an image forming apparatus**

(30) Priority: 20.01.2005 JP 2005013083
(71) Applicant: Brother Kogyo Kabushiki Kaisha, Nagoya-shi, Aichi-ken (JP)
(72) Inventor: Watanabe, Kazumi, Brother Kogyo K.K., Mizuho-ku Nagoya-shi Aichi-ken (JP)
(74) Representative: Kuhnen & Wacker

(57) **Abstract**

An image-forming system includes an image-forming device and a terminal device. The terminal device enables the image-forming device to form images based on image data. The terminal device includes: a determining portion; an acquiring portion; and a displaying portion. The determining portion determines whether bi-directional communication is possible between the terminal device and the image-forming device. The acquiring portion acquires, from the image-forming device, setup data related to a setup condition of the image-forming device when the determining portion determines that bi-directional communication is possible. The displaying portion displays data corresponding to the acquired setup data.

## Description

### CROSS REFERENCE TO RELATED APPLICATION

This application claims priority from Japanese Patent Application No. 2005-13083 filed January 20, 2005. The entire content of the priority application is incorporated herein by reference.

### TECHNICAL FIELD

The disclosure relates to an image-forming system including a terminal device and an image-forming device.

### BACKGROUND

For example, when a user purchases an image-forming device, the user must perform a setup operation, establishing various settings and the like needed to enable the image-forming device to form images based on image data transmitted from a personal computer. More specifically, the user installs a printer driver on the computer, connects the computer to the image-forming device with an interface, and the like. In addition, the user must mount a process cartridge in the body of the image-forming device, as described in Japanese unexamined patent application publication No. HEI-11-84845, mount a cassette accommodating sheets of a recording medium, and the like.

### SUMMARY

Since various settings and the like must be performed during this setup, a setup program is often provided for displaying the setup method and procedure with easy to understand animation and the like. This setup program is recorded on a CD-ROM or other storage medium that is included with a kit accompanying the image-forming device.

However, some users perform setup operations based on their knowledge of the setup procedure, without consulting the setup method or the like detailed in the computer program. The user may become confused in the middle of the setup process and, only at that time, decide to execute the setup program on the computer to check the setup procedure. However, conventional setup programs provided in a kit that is included in the package of the image-forming device do not account for cases in which the user has partially performed the setup process, but merely describe the procedure from the initial step. Therefore, it is difficult for the user to understand what stage in the setup process has been completed and what should be done next. Hence, the user must go through the entire procedure from the initial step.

In view of the foregoing, it is an object of the invention to provide a setup method, a setup device, an image-forming system, a storage medium, and a setup program capable of facilitating the setup operation.

In order to attain and other objects, the invention provides a setup method for enabling an image-forming device to form images based on image data. The setup method includes: determining whether bi-directional communication is possible with an image-forming device; acquiring, from the image-forming device, setup data related to a setup condition of the image-forming device when it is determined that bi-directional communication is possible; and displaying data corresponding to the acquired setup data.

According to another aspect, the invention provides a setup device for enabling an image-forming device to form images based on image data. The setup device includes: a determining portion; an acquiring portion; and a displaying portion. The determining portion determines whether bi-directional communication is possible with an image-forming device. The acquiring portion acquires, from the image-forming device, setup data related to a setup condition of the image-forming device when the determining portion determines that bi-directional communication is possible. The displaying portion displays data corresponding to the acquired setup data.

According to another aspect, the invention provides an image-forming system, including an image-forming device and a terminal device. The terminal device enables the image-forming device to form images based on image data. The terminal device includes: a determining portion; an acquiring portion; and a displaying portion. The determining portion determines whether bi-directional communication is possible between the terminal device and the image-forming device. The acquiring portion acquires, from the image-forming device, setup data related to a setup condition of the image-forming device when the determining portion determines that bi-directional communication is possible. The displaying portion displays data corresponding to the acquired setup data.

According to another aspect, the invention provides a storage medium storing a setup program readable by a computer. The setup program is executed by the computer during a setup process to enable an image-forming device to form images based on image data. The setup program includes: a determining program; an acquiring program; and a displaying program. The determining program determines whether bi-directional communication is possible with the image-forming device. The acquiring program acquires setup data related to a setup condition of the image-forming device when it is determined that bi-directional communication is possible. The displaying program controls a display device, which is connected to the computer, to display data corresponding to the acquired setup data.

According to another aspect, the invention provides a setup program executed by a computer during a setup process to enable an image-forming device to form images based on image data. The setup program instructs the computer to perform: determining whether bi-directional communication is possible with the image-forming device; acquiring setup data related to a setup condition of the image-forming device when it is determined that bi-directional communication is possible; and displaying on a display device connected to the computer data corresponding to the setup data acquired in the acquiring process.

According to another aspect, the invention provides an image-forming system including: a computer having a display device and having the setup program installed thereon; and an image-forming device connected to and capable of communicating with the computer.

With the above-described arrangement, by enabling bi-directional communication with the image-forming device, the setup status of the image-forming device can be displayed. Therefore, the user knows the setup status, thereby facilitating the user in completing the setup operation.

### BRIEF DESCRIPTION OF THE DRAWINGS

Illustrative aspects in accordance with the invention will be described in detail with reference to the following figures wherein:
Fig. 1 is a block diagram showing the overall structure of an image-forming system according to an illustrative aspect of the invention;
Fig. 2 is a perspective view of a multifunction device and a local computer;
Fig. 3 is a side cross-sectional view showing the internal structure of the multifunction device;
Fig. 4 is an explanatory diagram showing a top menu displayed on a display device;
Fig. 5 is an explanatory diagram showing a bi-directional communication error message displayed on the display device;
Fig. 6 is an explanatory diagram showing a setup status window on the display device;
Fig. 7 is a flowchart illustrating a part of steps in a control process performed by a CPU in the local computer;
Fig. 8 is a flowchart illustrating steps in a remaining part of the control process; and
Fig. 9 is an explanatory diagram showing the content of status data indicating the setup status.

### DETAILED DESCRIPTION

An image-forming system according to some aspects of the invention will be described while referring to the accompanying drawings wherein like parts and components are designated by the same reference numerals to avoid duplicating description.

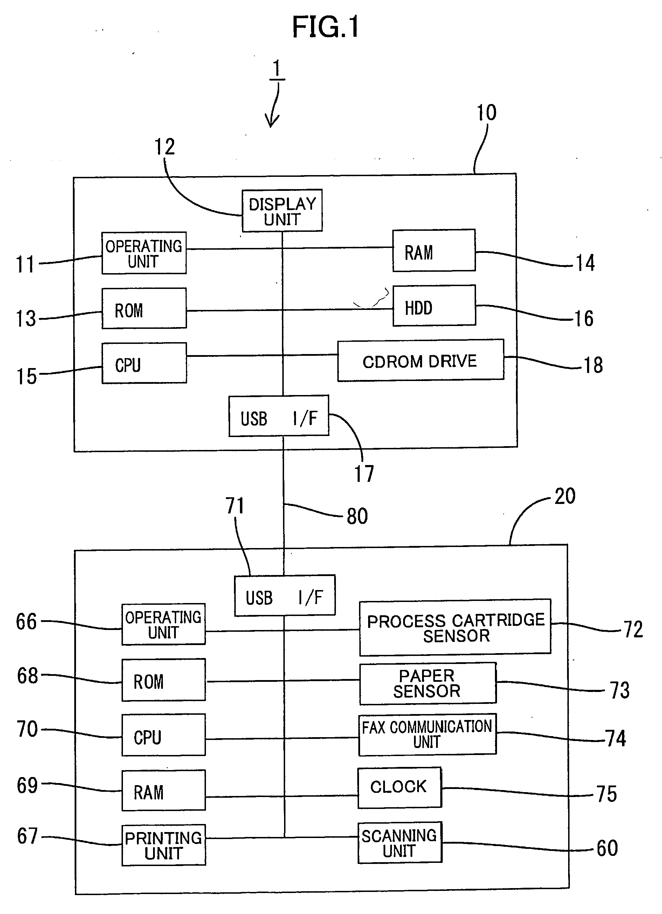

An illustrative aspect of the invention will be described with reference to Figs. 1 through 9. 1. Structure of an image-forming system

Fig. 1 is a block diagram showing the structure of an image-forming system 1 according to some aspect. The image-forming system 1 includes a local computer 10 and a multifunction device 20 that are locally connected with a USB cable 80 via USB ports so as to be capable of communicating with each other. The computer 10 transmits image data such as printer description language (PDL) data to the multifunction device 20, which data the multifunction device 20 receives and prints.

A setup program is installed on the computer 10. The setup program is executed to perform a setup operation for configuring the image-forming system 1 and facilitates smooth execution of this setup operation.

### (1) Local computer

The computer 10 includes an operating unit 11 that accepts input operations from an external source such as a keyboard and mouse; a display unit 12; a ROM 13; a RAM 14; a CPU 15; a hard disk drive 16; a USB interface 17; and a CD-ROM drive 18.

The hard disk drive 16 stores the setup program described above, a printer driver, application programs for creating print data, and the like. The CPU 15 reads the application programs, printer driver, and the like from the hard disk drive 16 and executes these programs based on start commands from the operating unit 11. The setup program is recorded on a storage medium (a CD-ROM in this aspect) provided in a kit that is included with the multifunction device 20. When executed, the setup program is read by the CD-ROM drive 18 and stored in the hard disk drive 16.

After the printer driver is installed and the image-forming system is configured, if the operating unit 11 receives a print request command when the user performs an input operation, data created for printing by an application (print data) is transferred to the printer driver. Here, the printer driver converts the print data to PDL data that can be processed by the printer and transmits the data via the USB interface 17. The printer driver includes many modules, such as a data conversion module for converting the print data, and a bi-directional communication module for enabling bi-directional communication with the multifunction device 20.

While the computer 10 may serve as a local computer that is used by each individual user, the computer 10 may serve also as a server, for example, that saves and manages software, files, and the like used by each of these users. Further, while the input operations of the user may be key input via a keyboard or the like, naturally a graphical user interface may also be used.

### (2) Multifunction device

### (a) Structure

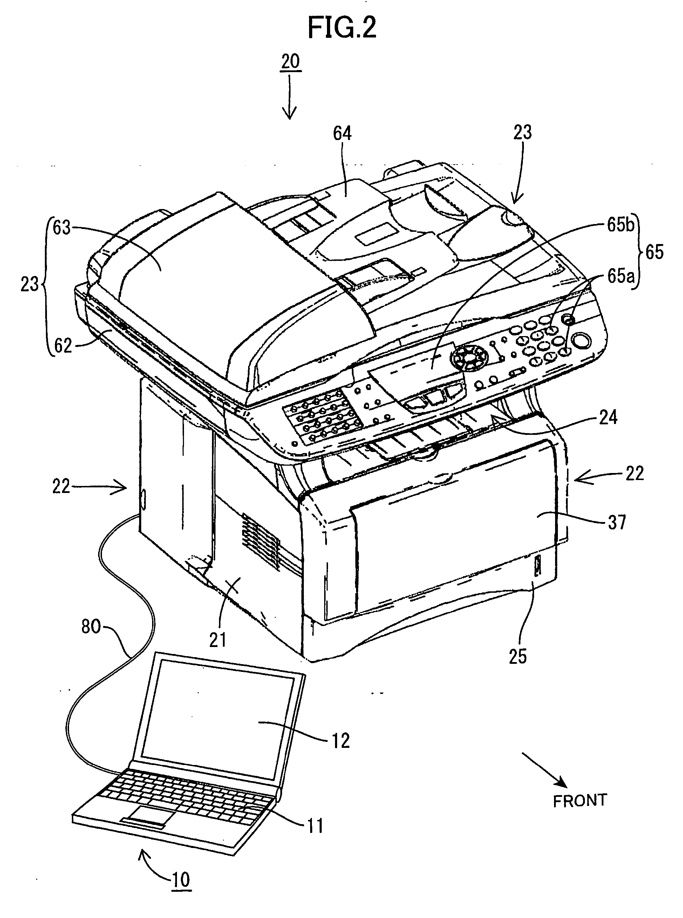

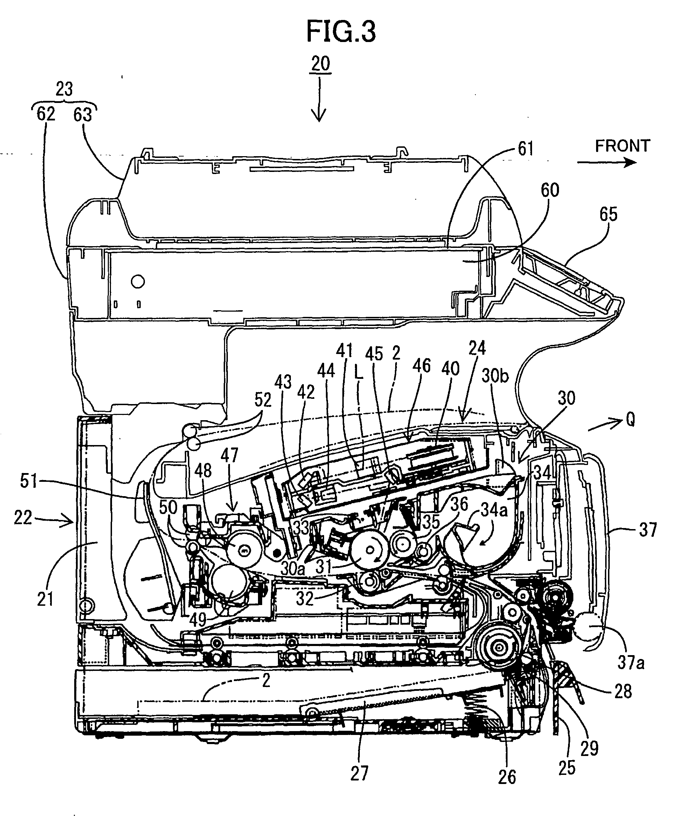

Fig. 2 is a perspective view of the multifunction device 20. Fig. 3 is a side cross-sectional view showing the internal structure of the multifunction device 20. The terms "front", "rear", "upward", "downward", "upper", "lower", "above", "below", "beneath" and the like will be used throughout the description assuming that the multifunction device 20 is disposed in an orientation in which it is intended to be used. In use, the multifunction device 20 is disposed as shown in Fig. 1.

The multifunction device 20 includes an image-forming unit 22 having a main casing 21, and an image-reading unit 23 disposed above the image-forming unit 22. The multifunction device 20 possesses a facsimile function, a scanner function, and a printer function. Further, the multifunction device 20 has an in-body paper discharge system, with a discharge tray 24 positioned between the image-forming unit 22 and image-reading unit 23.

As shown in Figs. 2 and 3, the multifunction device 20 includes a paper cassette 25 mounted in a lower section of the main casing 21 for accommodating sheets of a paper 2 stacked therein. The paper cassette 25 is detachably mounted in the main casing 21 and can be pulled out through the front side of the multifunction device 20. As shown in Fig. 3, a paper-pressing plate 27 is disposed in the paper cassette 25. A compressed spring 26 urges an end of the paper-pressing plate 27 upward so that the topmost sheet of the paper 2 stacked on the paper-pressing plate 27 contacts a feeding roller 28. Through the cooperative operations of a separating pad 29 disposed in opposition to the feeding roller 28, the feeding roller 28 separates and feeds the paper 2 one sheet at a time.

As shown in Fig. 3, a process cartridge 30 is disposed above the paper cassette 25. As with the paper cassette 25, the process cartridge 30 is also detachably mounted in the main casing 21 and can be pulled out of the main casing 21 in a direction Q indicated by an arrow in Fig. 3 in order to replace toner, perform maintenance, or the like. The process cartridge 30 includes a photosensitive drum cartridge 30a and a developer cartridge 30b. The photosensitive drum cartridge 30a accommodates a photosensitive drum 31 for carrying toner images, a transfer roller 32 for transferring the toner images carried on the photosensitive drum 31 to the paper 2, and a Scorotron charger 33 for generating a corona discharge in order to positively charge the surface of the photosensitive drum 31. The developer cartridge 30b includes a developer chamber 34 for accommodating toner, a developing roller 35 for supplying toner onto the photosensitive drum 31, and a supply roller 36 for supplying toner to the developing roller 35. An agitator 34a is disposed in the developer chamber 34 for agitating the toner.

The photosensitive drum cartridge 30a and developer cartridge 30b of the process cartridge 30 can be separated from each other, but the two cartridges are pulled out of the multifunction device 20 as a unit when removing the process cartridge 30 from the main casing 21. A front cover 37 is provided on the front surface of the main casing 21. The front cover 37 is attached so as to be able to rotate about the lower end thereof via a rotational shaft 37a. The front cover 37 is configured to cover the front surface side of the main casing 21. When the front cover 37 is rotated clockwise in Fig. 3, the front surface of the multifunction device 20 is opened and the process cartridge 30 can be removed.

A laser scanning unit 46 is disposed above the process cartridge 30. The laser scanning unit 46 includes a laser light-emitting unit (not shown), a polygon mirror 40 (six sided mirror) that is rotatably disposed, a lens 41, a reflecting mirror 42, a reflecting mirror 43, a lens 44, a reflecting mirror 45, and the like. As indicated by a broken line in Fig. 3, a laser beam L emitted by the laser light-emitting unit is deflected by the polygon mirror 40 and irradiated onto the photosensitive drum 31 via the lens 41, reflecting mirrors 42 and 43, lens 44, and reflecting mirror 45 to form an electrostatic latent image on the surface of the photosensitive drum 31.

A fixing unit 47 is disposed rearward of the process cartridge 30 for fixing toner on the paper 2. The fixing unit 47 includes a heating roller 48 for heating and melting toner that has been transferred onto the paper 2, a pressure roller 49 disposed in confrontation with the heating roller 48 for pressing the paper 2 against the heating roller 48, and a pair of conveying rollers 50 disposed downstream of the heating roller 48 and pressure roller 49.

As shown in Fig. 3, a curved conveying path 51 is disposed to the rear of the conveying rollers 50, and a pair of discharge rollers 52 is disposed near the downstream end of the conveying path 51. Hence, the paper 2 conveyed from the fixing unit 47 is turned upside down along the conveying path 51 and discharged by the discharge rollers 52 onto the discharge tray 24.

Next, the image-reading unit 23 will be briefly described. As shown in Fig. 3, the image-reading unit 23 includes an image-reading device 62, and an automatic document feeder (hereinafter referred to as an "ADF 63"). The image-reading device 62 includes a rectangular document support surface 61 disposed on the top surface thereof, and a scanning unit 60 disposed beneath the document support surface 61 for scanning images of documents. The ADF 63 is disposed so as to cover the document support surface 61. A document tray 64 (see Fig. 2) is provided on the top surface of the ADF 63 for holding a document. The ADF 63 functions to automatically convey documents held in the document tray 64 onto the document support surface 61.

Further, a control panel 65 is provided on an end of the image-reading device 62 on the front surface side of the multifunction device 20. The control panel 65 includes various operating buttons 65a and a liquid crystal display (LCD) unit 65b. In addition to performing various fixed operations, such as initiating a printing operation, the operating buttons 65a can be used to enter a station ID (data identifying the multifunction device 20 for facsimile function), set an internal clock, specify a language, and the like when setting up the image-forming system 1.

### (b) Hardware structure

A simplified hardware structure for the multifunction device 20 is shown in Fig. 1. As shown in Fig. 1, the multifunction device 20 includes an operating unit 66 for receiving pushing operations of the operating buttons 65a in the control panel 65 described above, a printing unit 67 for controlling printing operations for printing the paper 2, a ROM 68, a RAM 69, a CPU 70, and a USB interface 71. The multifunction device 20 also includes a process cartridge sensor 72 for detecting whether the process cartridge 30 is mounted in the main casing 21, a paper sensor 73 for detecting the existence of the paper 2 on the paper-pressing plate 27 in the paper cassette 25, a FAX communication unit 74 for exchanging data with another facsimile device when the facsimile function is implemented, and a clock 75. The CPU 70 controls operations of the other components.

The ROM 68 stores a program for replying to requests from the computer 10, a program for performing processes based on commands from the computer 10, a program for controlling the overall operations of the multifunction device 20, and the like.

More specifically, the ROM 68 stores a program for responding to a prescribed command signal (a signal requesting some kind of response signal from the multifunction device 20) that is transmitted from the computer 10. The ROM 68 also stores a program for returning setup data to the computer 10 in response to command signals received therefrom. This setup data indicates various setup conditions of the multifunction device 20, such as the existence of the process cartridge 30 detachably mounted in the multifunction device 20.

The CPU 70 performs a control process based on the programs stored in the ROM 68 to receive PDL data from the computer 10 via the USB interface 71 and to perform a printer description language process before transmitting the data to the printing unit 67. The printing unit 67 performs a printing operation to print data corresponding to the print data on the paper 2 based on the data received from the CPU 70.

The process cartridge sensor 72 is disposed in the main casing 21, for example, and detects the existence of the process cartridge 30 based on the movement of a contact member (not shown) contacting the surface of the process cartridge 30 when the process cartridge 30 is properly mounted, as shown in Fig. 3. The paper sensor 73 detects the existence of the paper 2 based on movement of a pivoting member (not shown). The pivoting member is disposed above the paper-pressing plate 27 and pivots from contact with the topmost sheet of paper 2 on the paper-pressing plate 27.

### 2. Control process according to the setup program

### (1) Setup steps

The computer 10 executes the setup program during a setup operation for configuring the image-forming system 1 described above. For example, a setup is required when a new multifunction device 20 is purchased and the image-forming system 1 is configured with an existing computer 10, or when adding a new computer 10 to an existing image-forming system 1, for example.

The following is a description for configuring the image-forming system 1 with the computer 10 and the newly-purchased multifunction device 20. In this case, the setup steps include the following, for example:
(a) Step for installing a printer driver provided in a kit with the multifunction device 20 on the computer 10 (hereinafter referred to as an "installation step");
(b) Step for connecting the USB cable 80 as an interface between the computer 10 and multifunction device 20 (hereinafter referred to as a "computer connection step");
(c) Step for inserting the process cartridge 30 in the main casing 21 of the multifunction device 20 (hereinafter referred to as a "process cartridge insertion step");
(d) Step for loading the paper 2 in the paper cassette 25 and inserting the paper cassette 25 into the main casing 21 (hereinafter referred to as a "paper loading step"); and
(e) Step for setting the language preference for text displayed on the LCD unit 65b of the control panel 65 (hereinafter referred to as a "language setup step").

More specifically, when the multifunction device 20 is shipped to various countries, for example, a plurality of languages may be provided in the multifunction device 20. On shipment, the multifunction device 20 is set to the default language for a predetermined country. If the default language set on the new multifunction device 20 does not match the language used on the computer 10, the language setting must be modified so the same language is used on both. This step allows the language preference to be set.

### (2) Control process

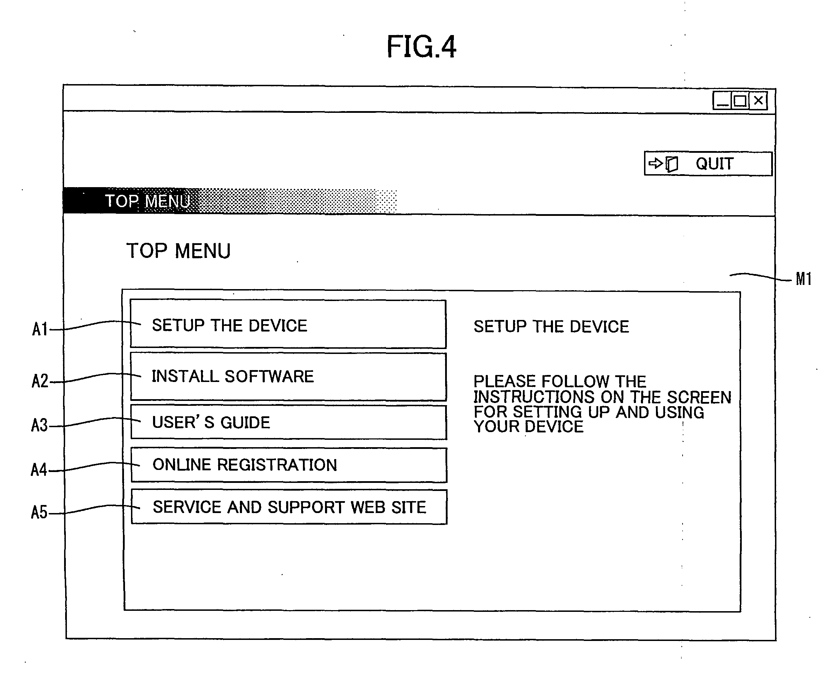

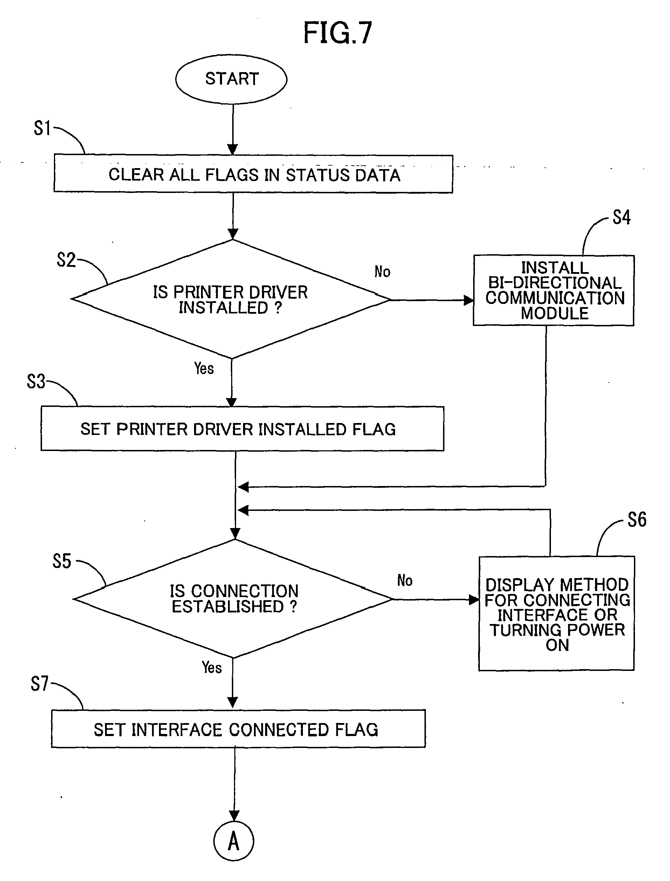

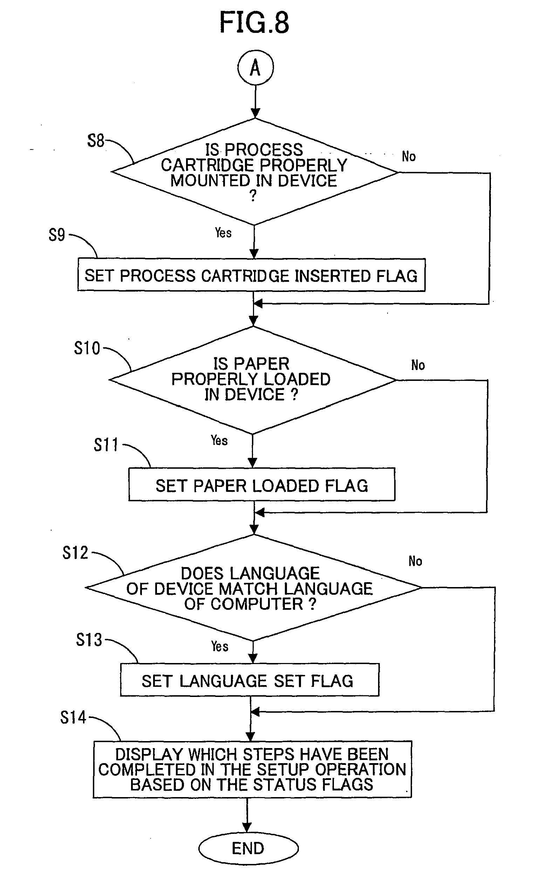

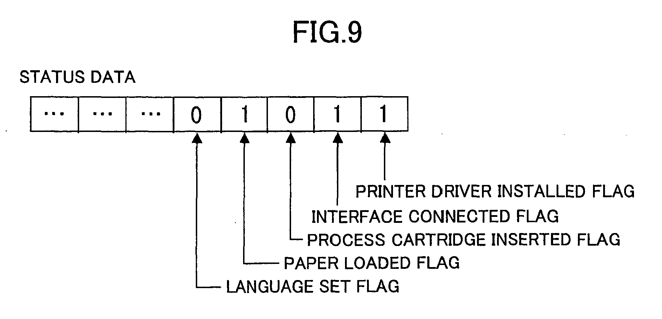

Next, a control process according to the setup program will be described with reference to Figs. 4 through 9. This process is performed when the setup program is started. Figs. 4 through 6 are explanatory diagrams showing display screens on the display unit 12 of the computer 10. Figs. 7 and 8 are flowcharts illustrating the steps in the control process according to the setup program. Fig. 9 is an explanatory diagram showing an example of status data stored on the hard disk drive 16 of the computer 10 after installation with the setup program. As shown in Fig. 9, this status data includes various storage regions for storing a language set flag, a paper loaded flag, a process cartridge inserted flag, an interface connected flag, and a printer driver installed flag.

As shown in Fig. 4, the setup program includes setup procedure data. Accordingly, the setup operation can be completed smoothly if the user installs the setup program on the computer 10 at the beginning of the setup operation, launches the program, and performs operations according to the setup procedure data displayed on the display unit 12. However, many users attempt to perform the setup operation based on their own knowledge without viewing the setup procedure data and, after becoming confused during the operation, only then install and execute the setup program on the computer 10.

When the setup program is launched on the computer 10, a top menu M1 shown in Fig. 4 is displayed on the display unit 12. Included in the top menu M1 are, for example, a button A1 for executing the setup program (displaying the aforementioned setup procedure data, and the like), a button A2 for installing software including the printer driver, a button A3 for displaying a user's guide on the display unit 12, a button A4 for performing online registration, and a button A5 for displaying a service and support web site.

If the user clicks on the A1 button next to "Setup the device," then the CPU 15 executes the control process shown in Fig. 7. First, in S1 the CPU 15 initializes the status data by clearing all flags. In S2 the CPU 15 executes a driver detecting process to determine whether the printer driver for the multifunction device 20 has been installed on the hard disk drive 16 in the computer 10. In other words, the CPU 15 determines whether the installation step described above has been performed. If the printer driver has been installed (S2: YES), then in S3 the CPU 15 sets the printer driver installed flag in the status data.

However, if the printer driver has not been installed (S2: NO), then in S4 the CPU 15 executes a partial installing process for installing only a bi-directional communication module included in the printer driver from the CD-ROM set in the CD-ROM drive 18. At this time, the CPU 15 does not set the printer driver installed flag.

Next, in S5 the CPU 15 executes a determining process to determine whether the computer 10 and multifunction device 20 are connected with the USB cable 80, that is, whether bi-directional communication is possible. In other words, the CPU 15 determines whether the computer connection step has been performed.

More specifically, the CPU 15 of the computer 10 performs a process to output the prescribed command signal (signal requesting some kind of response signal from the multifunction device 20) via the USB interface 17 by executing the bi-directional communication module. The ROM 68 in the multifunction device 20 stores a program for responding to such command signals and can respond to such a request via the USB interface 71.

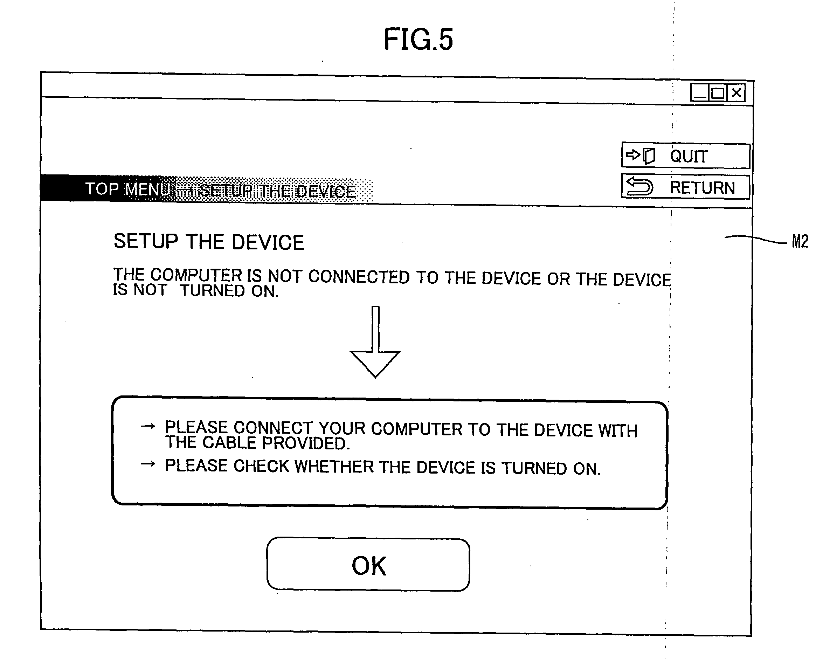

If the computer 10 and multifunction device 20 are not connected via the USB cable 80 or if the computer 10 and multifunction device 20 are connected, but the power to the multifunction device 20 has not been turned on, for example, then the multifunction device 20 will not transmit a response signal in response to the command signal. Therefore, the CPU 15 will not detect a response signal in this detecting process and will determine that bi-directional communication is not possible (S5: NO). Therefore, in S6 the CPU 15 will execute a prompting process for displaying a bi-directional communication error screen M2, as shown in Fig. 5, on the display unit 12 prompting the user to connect the computer 10 and multifunction device 20 and turn on the power to the multifunction device 20.

However, if the computer 10 and multifunction device 20 are properly connected via the USB cable 80, and the multifunction device 20 sends back a response signal, then the CPU 15 can detect the response signal in the detecting process and determine that bi-directional communication is possible (S5: YES). Therefore, the CPU 15 sets the interface connected flag in S7.

Once bi-directional communication is possible through the process described above, the CPU 15 executes an acquiring process to acquire setup data from the multifunction device 20 describing the setup conditions of the multifunction device 20. Specifically, in S8 of Fig. 8 the CPU 15 transmits a command signal to the multifunction device 20 requesting setup data regarding whether the process cartridge 30 is properly mounted in the main casing 21. In response, the CPU 70 of the multifunction device 20 reads detection data (setup data) from the process cartridge sensor 72 and transmits this data back to the computer 10. The CPU 15 determines whether the process cartridge insertion step has been completed based on this signal.

If the CPU 15 determines that the process cartridge insertion step has been properly performed (S8: YES), then in S9 the CPU 15 sets the process cartridge inserted flag. However, if the process cartridge is not mounted (S8: NO), then the CPU 15 does not set the process cartridge inserted flag.

Next, in S10 the CPU 15 transmits a command signal to the multifunction device 20 requesting setup data regarding whether the paper 2 has been loaded in the paper cassette 25. In response, the CPU 70 of the multifunction device 20 reads detection data (setup data) from the paper sensor 73 and transmits this data back to the computer 10. The CPU 15 determines whether the paper loading step has been performed based on this signal. If the paper loading step has been properly performed (S10: YES), then in S11 the CPU 15 sets the paper loaded flag. However, if the CPU 15 determines that paper has not been loaded (S10: NO), then the CPU 15 does not set the paper loaded flag.

In S12 the CPU 15 transmits a command signal to the multifunction device 20 requesting the current language preference set in the multifunction device 20. In response, the CPU 70 of the multifunction device 20 transmits the language data (setup data) back to the computer 10. The CPU 15 determines whether the language setup step has been performed based on this signal. Specifically, the CPU 15 determines whether the language set in the language data received from the multifunction device 20 matches the language currently used on the computer 10. If the CPU 15 determines that the language setup step has been performed, that is, that the languages match (S12: YES), then in S13 the CPU 15 sets the language set flag. However, if the CPU 15 determines that the language setup step has not been performed (S12: NO), then the CPU 15 does not set the language set flag.

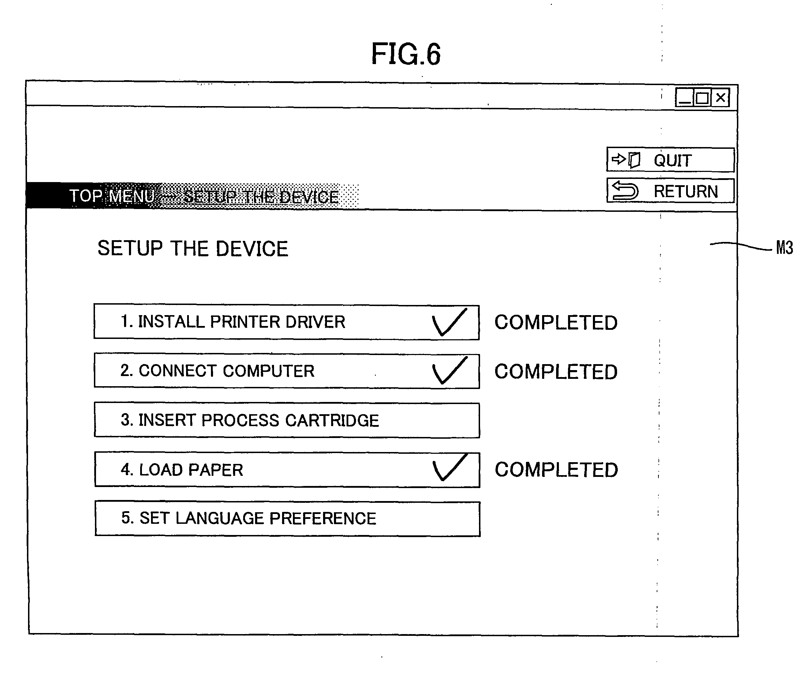

After performing the aforementioned steps, in S14 the CPU 15 reads the status data and displays a setup status screen M3, shown in Fig. 6, on the display unit 12. As shown in Fig. 6, the setup status screen M3 displays a list of the setup steps (a)-(e) described above, and displays a mark with "completed" next to each step that has been completed. In this example, the installation step, computer connection step, and paper loading step are shown to be completed in the setup status screen M3. Hence, after checking this screen M3, the user can determine that the process cartridge insertion step and the language setup step must still be performed. By clicking on one of the setup steps, the method and procedure for completing that step will be displayed.

In the setup status screen M3, those setup steps that have not been completed may be displayed in a desirable order, in which those setup steps should be executed.

The setup status screen M3 may be modified to display a list of only those setup steps that have not been completed. However, displaying all of the setup steps, as shown in Fig. 6, is preferable because it enables the user to see how far the setup operation has progressed.

By enabling bi-directional communication between the computer 10 and multifunction device 20, the setup status of the multifunction device 20 can be displayed as the setup status screen M3 on the display unit 12 of the computer 10. The setup status screen M3 aids the user in understanding what steps in the setup have been completed and what steps have not been performed. Therefore, the user can determine how far the setup has progressed and what remains to be done based on the display, thereby facilitating the user in completing the setup operation.

Further, the setup program is configured to acquire various setup data from the multifunction device 20 using command signals that the computer 10 transmits to the multifunction device 20 during normal printing operations. The effects of this setup program can also be obtained with an existing multifunction device 20.

More specifically, multifunction devices generally have a function to return setup data, such as the existence of the process cartridges, to computers in response to command signals received therefrom. The setup program uses this function in S8, S10, and S12 by outputting the command signal in order to obtain setup data.

Further, when the installation step described above has not been performed, the setup program is configured to install the bi-directional communication module on the computer 10 as the highest priority. Accordingly, the setup program can execute the steps in Figs. 7 and 8 to learn the setup conditions of the multifunction device 20 without the user waiting to install the entire printer driver.

More specifically, the printer driver that is installed on the computer 10 during the setup includes the module for converting data stored on the computer to a format that the multifunction device 20 can use to form images, and the bi-directional communication module enabling bi-directional communication with the multifunction device 20. However, installing the plurality of modules can take a considerable amount of time. On the other hand, simply installing the bi-directional communication module on the computer 10 is sufficient to obtain setup data from the multifunction device 20. Therefore, when it is determined that the printer driver is not installed on the computer 10 (no in S2), the setup program installs only the bi-directional communication module as top priority in S4 in order to learn the setup conditions of the multifunction device 20 quickly.

In the setup program, if bi-directional communication is determined to be not possible when at least the bi-directional communication module has been installed on the computer (no in S5), then a message is displayed in S6 prompting the user to check whether the power to the multifunction device 20 has been turned on and whether the multifunction device 20 has been connected to the computer 10 with an interface, enabling the user to take appropriate actions.

While the invention has been described in detail with reference to the above aspects thereof, it would be apparent to those skilled in the art that various changes and modifications may be made therein without departing from the spirit of the invention.

For example, the setup program of the above description includes five steps in the setup procedure. However, the setup program may be modified to include any other steps in the setup procedure. For example, the setup program may include an ID entry step for entering the station ID of the multifunction device 20, and a step for setting the clock 75 (an operation for starting the clock 75, an operation for syncing the clock 75 with the internal clock of the computer 10, and the like). Or, some of the above-described five steps may not be included in the setup procedure. The setup program may be configured to include any desirable steps in the setup procedure.

While the computer 10 and multifunction device 20 are connected locally via USB ports in the above description, they may also be connected locally via a parallel port or connected via a local area network (LAN) or the like.

In the above description, the setup program is installed from a CD-ROM. However, the setup program may be installed from other storage medium, or may be downloaded from the Internet and installed.

In the above description, the bi-directional communication error screen M2 prompts the user to perform both of the connecting process to connect the computer 10 and multifunction device 20 and the turning-on process to turn on the power to the multifunction device 20. However, the bi-directional communication error screen M2 may be modified to prompt the user to perform at least one of the connecting process and the turning-on process.

The multifunction device 20 may be modified into other various types of image-forming device that forms images. For example, the multifunction device 20 may be modified to a printing device, such as a laser printer, a facsimile device, or the like.

The multifunction device 20 may print images on various types of recording medium, including a paper recording medium, a plastic recording medium (overhead projector sheets, for example), and the like.

The command signal transmitted in S5 from the computer 10 to the multifunction device 20 may be any kind of command signal that requests some response signal from the multifunction device 20. For example, the command signals that are used for requesting setup data in S8, S10, and S12 may be used also as the command signal in S5.

## Claims

1. A setup method for enabling an image-forming device to form images based on image data, the setup method comprising:
determining whether bi-directional communication is possible with an image-forming device;
acquiring, from the image-forming device, setup data related to a setup condition of the image-forming device when it is determined that bi-directional communication is possible; and
displaying data corresponding to the acquired setup data.

2. A setup method according to Claim 1, wherein the determining comprises:
outputting, to the image-forming device, a response-request command signal requesting a response signal; and
detecting a response signal corresponding to the response-request command signal from the image-forming device, and determining, when a response signal is not detected, that bi-directional communication is impossible.

3. A setup method according to Claim 1, wherein the acquiring acquires the setup data by outputting, to the image-forming device, a condition-request command signal requesting the setup condition of the image-forming device.

4. A setup method according to Claim 1, further comprising:
detecting whether an image-forming driver has been installed in a storage portion; and
installing, in the storage portion, a bi-directional communication module when the image-forming driver has not been installed.

5. A setup method according to Claim 4, further comprising:
displaying a prompting window that prompts a user at least one of a turning-on process to turn power on to the image-forming device and a connecting process to connect with the image-forming device via an interface when at least the bi-directional communication module has been installed in the storage portion and when it is determined that bi-directional communication is impossible.

6. A setup method according to Claim 1, wherein the setup data includes data indicating at least one of existence of a process cartridge detachably mounted in the image-forming device and existence of a recording medium on which images are to be formed.

7. A setup method according to Claim 1, wherein the displaying displays steps in the setup and whether setup has been completed for these steps.

8. A setup device for enabling an image-forming device to form images based on image data, the setup device comprising:
a determining portion that determines whether bi-directional communication is possible with an image-forming device;
an acquiring portion that acquires, from the image-forming device, setup data related to a setup condition of the image-forming device when the determining portion determines that bi-directional communication is possible; and
a displaying portion that displays data corresponding to the acquired setup data.

9. A setup device according to Claim 8, wherein the determining portion comprises:
an outputting portion that outputs, to the image-forming device, a response-request command signal requesting a response signal; and
a detecting portion that detects a response signal corresponding to the response-request command signal from the image-forming device, and that determines, when a response signal is not detected, that bi-directional communication is impossible.

10. A setup device according to Claim 8, wherein the acquiring portion acquires the setup data by outputting, to the image-forming device, a condition-request command signal requesting the setup condition of the image-forming device.

11. A setup device according to Claim 8, further comprising:
a storage portion;
a driver detecting portion that detects whether an image-forming driver is installed in the storage portion; and
an installing portion that installs, in the storage portion, a bi-directional communication module when the driver detection portion detects that the image-forming driver is not installed in the storage portion.

12. A setup device according to Claim 11, wherein the displaying portion displays a prompting window that prompts a user at least one of a turning-on process to turn power on to the image-forming device and a connecting process to connect with the image-forming device via an interface when at least the bi-directional communication module is installed in the storage portion and when the determining portion determines that bi-directional communication is impossible.

13. A setup device according to Claim 8, wherein the setup data includes data indicating at least one of existence of a process cartridge detachably mounted in the image-forming device and existence of a recording medium on which images are to be formed.

14. A setup device according to Claim 8, wherein the displaying portion displays steps in the setup and whether setup has been completed for these steps.

15. An image-forming system, comprising:
an image-forming device; and
a terminal device that enables the image-forming device to form images based on image data, the terminal device comprising:
a determining portion that determines whether bi-directional communication is possible between the terminal device and the image-forming device;
an acquiring portion that acquires, from the image-forming device, setup data related to a setup condition of the image-forming device when the determining portion determines that bi-directional communication is possible; and
a displaying portion that displays data corresponding to the acquired setup data.

16. An image-forming system according to Claim 15, wherein the determining portion in the terminal device comprises:
an outputting portion that outputs, to the image-forming device, a response-request command signal requesting a response signal; and
a detecting portion that detects a response signal corresponding to the response-request command signal from the image-forming device, and that determines, when a response signal is not detected, that bi-directional communication is impossible.

17. An image-forming system according to Claim 15, wherein the acquiring portion in the terminal device acquires the setup data by outputting, to the image-forming device, a condition-request command signal requesting the setup condition of the image-forming device.

18. An image-forming system according to Claim 15, wherein the terminal device further comprises:
a storage portion;
a driver detecting portion that detects whether an image-forming driver is installed in the storage portion; and
an installing portion that installs, in the storage portion, a bi-directional communication module when the driver detection portion detects that the image-forming driver is not installed in the storage portion.

19. An image-forming system according to Claim 18, wherein the displaying portion in the terminal device displays a prompting window that prompts a user at least one of a turning-on process to turn power on to the image-forming device and a connecting process to connect an interface between the terminal device and the image-forming device when at least the bi-directional communication module is installed in the storage portion and when the determining portion determines that bi-directional communication is impossible.

20. An image-forming system according to Claim 15, wherein the setup data includes data indicating at least one of existence of a process cartridge detachably mounted in the image-forming device and existence of a recording medium on which images are to be formed.

21. An image-forming system according to Claim 15, wherein the displaying portion displays steps in the setup and whether setup has been completed for these steps.

22. A storage medium storing a setup program readable by a computer, the setup program being executed by the computer during a setup process to enable an image-forming device to form images based on image data, the setup program comprising:
a determining program that determines whether bi-directional communication is possible with the image-forming device;
an acquiring program that acquires setup data related to a setup condition of the image-forming device when it is determined that bi-directional communication is possible; and
a displaying program that controls a display device, which is connected to the computer, to display data corresponding to the acquired setup data.

23. A storage medium according to Claim 22, wherein the determining program comprises:
an outputting program that outputs a response-request command signal to the image-forming device; and
a detecting program that detects existence of a response signal corresponding to the response-request command signal from the image-forming device and that determines that bi-directional communication is impossible when a response signal is not detected.

24. A storage medium according to Claim 22, wherein the acquiring program acquires the setup data by outputting to the image-forming device a condition-request command signal requesting the setup condition of the image-forming device.

25. A storage medium according to Claim 22, wherein the setup program further comprises:
a driver detecting program that detects whether an image-forming driver has been installed on the computer; and
a partial installing program that installs a bi-directional communication module when the driver detecting program detects that the image-forming driver has not been installed on the computer.

26. A storage medium according to Claim 25, wherein the setup program further comprises a prompting program that controls the display device to display a prompting window that prompts a user at least one of a turning-on process to turn power on to the image-forming device and a connecting process to connect an interface between the computer and image-forming device when at least the bi-directional communication module has been installed and when the determining program determines that bi-directional communication is impossible.

27. A storage medium according to Claim 22, wherein the setup data includes data indicating at least one of existence of a process cartridge detachably mounted in the image-forming device and existence of a recording medium on which images are to be formed.

28. A storage medium according to Claim 22, wherein the displaying program controls the display device to display steps in the setup and whether setup has been completed for these steps.

29. A setup program executed by a computer during a setup process to enable an image-forming device to form images based on image data, the setup program instructing the computer to perform:
determining whether bi-directional communication is possible with the image-forming device;
acquiring setup data related to a setup condition of the image-forming device when it is determined that bi-directional communication is possible; and
displaying on a display device connected to the computer data corresponding to the setup data acquired in the acquiring process.

30. An image-forming system comprising:
a computer having a display device and having a setup program according to claim 29 installed thereon; and
an image-forming device connected to and capable of communicating with the computer.
